# EUROPÄISCHE PATENTSCHRIFT

(11) **EP 2 771 585 B1**
(45) Veröffentlichungstag und Bekanntmachung des Hinweises auf die Patenterteilung: **24.02.2016**
(21) Anmeldenummer: 12786867.7
(22) Anmeldetag: 25.10.2012
(51) Int. Cl.: F16C 33/64, F16C 33/58, B23P 15/00, C21D 9/40, C21D 1/02, F16C 19/36

(54) **VERFAHREN ZUM HERSTELLEN EINES LAUFBAHNELEMENTS EINER LAGERANORDNUNG UND LAUFBAHNELEMENT**
METHOD OF MANUFACTURE A RACEWAY ELEMENT OF A BEARING ARRANGEMENT AND RACEWAY ELEMENT
PROCÉDÉ DE FABRICATION DE' UN ÉLÉMENT CHEMIN DE ROULEMENT D'UN PALIER À ROULEMENT ET ÉLÉMENT CHEMIN DE ROULEMENT D'UN PALIER À ROULEMENT

(30) Priorität: 26.10.2011 DE 102011085205
(43) Veröffentlichungstag der Anmeldung: 03.09.2014
(73) Patentinhaber: Aktiebolaget SKF, 415 50 Göteborg (SE)
(72) Erfinder: GEGNER, Jürgen, 91301 Forchheim (DE); KRUG, Udo, 97531 Theres (DE); OHLSCHEWSKI, Armin, 97422 Schweinfurt (DE); STUBENRAUCH, Arno, 97491 Aidhausen (DE)
(74) Vertreter: Kuhstrebe, Jochen
(86) Internationale Anmeldenummer: PCT/EP2012/071167
(87) Internationale Veröffentlichungsnummer: WO 2013/060783

(56) Entgegenhaltungen:
- EP-A1- 1 505 306
- EP-A2- 1 340 824
- DE-A1-102006 055 027
- DE-A1-102007 055 575

## Beschreibung

Die Erfindung betrifft ein Verfahren zum Herstellen eines Laufbahnelements einer Lageranordnung und ein Laufbahnelement einer Lageranordnung.

Beim Einsatz von Wälzlagerungen gibt es verschiedene Schadensmechanismen, die die Lebensdauer der Wälzlagerung negativ beeinflussen können. Durch Materialermüdung an und unterhalb der Laufbahn eines Wälzlagers können aufgrund der zyklischen Beanspruchung im Hertz'schen Mikro- bzw. Makrokontakt infolge des fortwährenden Überrollens durch die Wälzkörper beispielsweise Gefügeänderungen und Risse entstehen, die in der Folge zum Ausfall des Wälzlagers führen können. Unter dem Einfluss von Mischreibung im Wälzkontakt können zudem beispielsweise spaltbruchähnliche spröde Gewaltbruchanrisse an Laufbahnoberflächen eingeleitet werden, die z. B. unter Mitwirkung von eindringendem alterndem Schmierstoff getrieben von Schwingungsrisskorrosion in die Tiefe des Werkstoffs wachsen und durch Rissrückläufer zur Oberfläche sowie Materialablösung an den Risskanten schließlich Laufbahnschälungen auslösen können. Gerade der zuletzt genannte Mechanismus der Schwingungsrisskorrosion kann zu Frühausfällen von Wälzlagern bis weit vor der nominellen L10-Lebensdauer (90% Überlebenswahrscheinlichkeit) führen. Mittels bekannter Methoden, wie beispielsweise Hartdrehen und anderer randschichtverfestigender Verfahren ist es möglich, durch Aufbau von Druckeigenspannungen an und unter der Oberfläche der Laufbahn die Bildung und Ausbreitung derartiger Risse zu behindern.

Ein Verfahren zum Herstellen von Wälzlagerringen, bei dem Druckeigenspannungen unter die Laufbahnen eingebracht werden, ist aus EP 1 505 306 A1 bekannt.

Es ist Aufgabe der vorliegenden Erfindung ein Laufbahnelement einer Wälzlageranordnung und ein Verfahren zur Herstellung des Laufbahnelements anzugeben, das gegenüber bekannten Wälzlageranordnungen eine erhöhte Lebensdauer aufweist.

Diese Aufgabe wird durch ein Verfahren zur Herstellung eines Laufbahnelements einer Lageranordnung mit den Merkmalen des Hauptanspruchs bzw. durch ein Laufbahnelement einer Lageranordnung mit den Merkmalen des nebengeordneten Patentanspruchs gelöst. Vorteilhafte Ausgestaltungen der Erfindung sind Gegenstand der jeweils abhängigen Unteransprüche.

Gemäß Hauptanspruch wird ein Verfahren zum Herstellen eines Laufbahnelements einer Lageranordnung, umfassend folgende Verfahrensschritte angegeben:
- Bereitstellen eines Laufbahnelements mit einer Laufbahn,
- Härten der Laufbahn durch wenigstens teilweises Aufheizen des Laufbahnelements,
- Festwalzen der Laufbahn mit einem ersten Rollkörper und
- Festwalzen der Laufbahn mit einem zweiten Rollkörper, wobei der zweite Rollkörper im Vergleich zum ersten Rollkörper wenigstens eine andere Abmessung aufweist.

Ein Aspekt der Erfindung beruht wesentlich auf der Erkenntnis, dass sich durch die Methode des Festwalzens mit wenigstens zwei unterschiedlich dimensionierten Rollkörpern eine besonders vorteilhafte Veränderung des Eigenspannungszustands und der Mikrostruktur an und nahe der Oberfläche des Laufbahnelements erreichen lässt. Mit dem Begriff Eigenspannungen werden hier in der üblichen Weise die Eigenspannungen 1. Art (Makroeigenspannungen) bezeichnet. Durch Festwalzen lässt sich die Ausbildung von Druckeigenspannungen unter der Oberfläche von Metallen erreichen, das Material also kaltverfestigen. Im Allgemeinen werden dabei, der Vergleichsspannung nach von Mises folgend, unmittelbar an der Oberfläche Druckeigenspannungen zu einem gewissen Grad aufgebaut, der sich mit zunehmender Tiefe bis zu einem Maximalwert intensiviert. Mit weiter zunehmender Tiefe nimmt der Betrag der Druckeigenspannung dann wieder ab. Typischerweise können in gehärteten Stählen Druckeigenspannungen in signifikanter Größe bis zu einem Tiefenbereich von mehreren 100 µm erzeugt werden. Bei bekannten Verfahren des Festwalzens besteht jedoch eine vergleichsweise große Differenz zwischen dem betraglichen Maximalwert der Druckeigenspannungen und dem Betrag der Druckeigenspannungen an der Oberfläche bzw. in geringer Tiefe von ungefähr 10 µm bzw. wenigen 10 µm. Bis zum Maximalwert der Druckeigenspannung am Ort der höchsten von Mises-Vergleichsspannung für den Hertz'schen (Makro-) Kontakt mit dem Rollkörper fällt der Betrag der Druckeigenspannungen zur Oberfläche hin somit vergleichsweise stark ab. Um beim Festwalzen sowohl an und sehr nahe der Oberfläche bis in eine typische Tiefe von mehreren 10 µm als auch in größerer Tiefe von typischerweise mehreren 100 µm einen ausreichenden Betrag an Druckeigenspannungen aufzubauen, ist es vorteilhaft möglich, mit Rollkörpern unterschiedlichen Durchmessers zu arbeiten. Durch das abwechselnde Festwalzen der Laufbahn mit zwei oder mehr unterschiedlich großen Rollkörpern lässt sich gezielt eine optimale Eigenspannungsverteilung zwischen der Oberfläche und den Maxima bzw. dem zusammenwachsenden Maximum der Druckeigenspannungen einstellen, wodurch bereits in geringeren Tiefen bis beispielsweise 100 µm eine dem Maximalwert ausreichend angenäherte Druckeigenspannung erzeugt werden kann. Plastifizierung und Druckeigenspannungsaufbau hängen nämlich maßgeblich mit der Geometrie des beim Festwalzen verwendeten Rollkörpers zusammen. Neben dem Druckeigenspannungsaufbau führt Versetzungsgleiten während der plastischen Verformung zur Ausbildung energetisch günstiger Versetzungsanordnungen (z. B. Versetzungsmultipole), was die Mikrostruktur des Werkstoffs stabilisiert.

In einer bevorzugten Ausführungsform der Erfindung weisen beide Rollkörper eine kugeloder zylinderartige Form und unterschiedliche Durchmesser auf. Alternativ sind auch gemischte Verwendungen von Zylindern oder kugelartigen Rollkörpern mit unterschiedlichen Durchmessern möglich.

Vorteilhafterweise lässt sich nach dem Festwalzen mit dem zweiten Rollkörper ein materialabtragender Verfahrensschritt einführen, bei dem die Oberfläche des Laufbahnelements im Bereich der Laufbahn teilweise entfernt wird. Dies ist insbesondere dann von Vorteil, wenn durch den Festwalzschritt die Oberflächenrauhigkeit derart erhöht wurde, dass die Qualität für einen guten Lagerbetrieb im Wälzkontakt nicht mehr ausreichend ist. Dabei ist insbesondere ein Hon- oder schonender Schleifvorgang vorteilhaft, beispielsweise Gleitschleifen, bei dem weniger als 50 µm Material von der Oberfläche entfernt werden, um den Tiefenbereich der aufgebauten Druckeigenspannungen weitgehend zu erhalten. Vorteilhaft ist ebenfalls, eine abschließende thermische Nachbehandlung zumindest der Laufbahn des Laufbahnelements bei einer Temperatur, die kleiner als die Anlass- oder Umwandlungstemperatur beim martensitischen bzw. bainitischen Härten ist. Dieses Nacherwärmen dient der beispielsweise durch die Abnahme der röntgenografischen Linienbreite nachweisbaren Stabilisierung der Mikrostruktur des Werkstoffs in der mechanisch beeinflussten Randschicht und kann an Luft oder in chemisch inerter Umgebung (z. B. Vakuum, Schutzgas, Salzbad) erfolgen. Durch den gewählten Temperaturbereich wird bei typischer Dauer der thermischen Nachbehandlung von etwa 1 Stunde einem Verlust an Härte entgegengewirkt.

Weitere Vorteile und Ausgestaltungen der Erfindung ergeben sich aus dem im Folgenden beschriebenen Ausführungsbeispiel der Erfindung anhand der beigefügten Figuren. Es zeigen:
- Figur 1: eine Kegelrollenlageranordnung und
- Figur 2: ein schematisches Diagramm eines typischen Druckeigenspannungsverlaufs eines Laufbahnelements des Kegelrollenlagers der Figur 1.

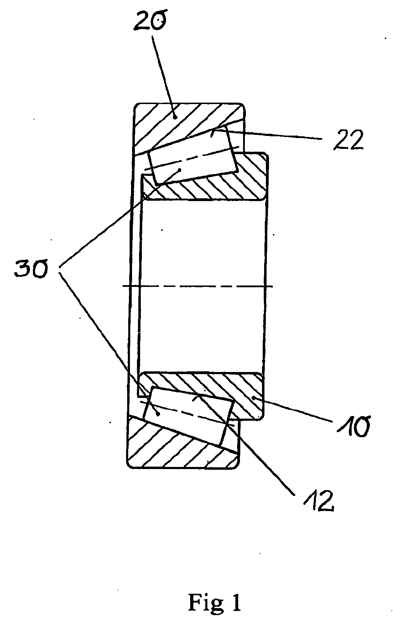

Das erfindungsgemäße Laufbahnelement lässt sich insbesondere bei hoch belasteten Kegelrollen- bzw. Zylinderrollenlageranordnungen einsetzen, wie sie beispielsweise in Windkraftanwendungen, anderen Industriegetrieben oder Schiffsantrieben eingesetzt werden. Die Figur 1 zeigt als ein Ausführungsbeispiel der Erfindung in Form einer Prinzipskizze ein Kegelrollenlager. Dabei umfasst das Kegelrollenlager ein äußeres Laufbahnelement 20 und ein inneres Laufbahnelement 10, zwischen denen als Kegelstümpfe ausgebildete Wälzkörper 30 angeordnet sind. Dabei können die Wälzkörper 30 in einem nicht dargestellten Käfig angeordnet sein und zwischen den beiden Laufbahnelementen 10 und 20 können zum Abdichten eines die Wälzkörper 30 beinhaltenden Raums entsprechende Dichtungen vorgesehen sein. Die Wälzkörper 30 sind dabei zum Abrollen auf in die Laufbahnelemente 10 und 20 eingearbeiteten Abrollbahnen 12 und 22 vorgesehen. In anderen Ausführungen kann es sich natürlich auch um ein mehrreihiges Wälzlager und/oder um Zylinderrollenlager, Kugellager, Tonnenlager, Pendelrollenlager und jeglichen anderen Wälzlagertyp handeln.

In Ausführungsbeispielen der Erfindung ist es vorteilhaft, den Verlauf der Druckeigenspannungen von der Oberfläche bis in den Bereich des Druckeigenspannungsmaximums in der Tiefe gleichmäßiger auszugestalten, als dies mit bekannten Verfahren wie Kugelstrahlen, Hartdrehen oder herkömmlichen Festwalzprozessen möglich ist. Dies wird insbesondere dadurch erreicht, dass nach dem Härten der Laufbahn des Laufbahnelements zwei Festwalzschritte mit unterschiedlichen Rollkörpern durchgeführt werden. Dabei wird beispielsweise mit zwei Keramik- oder Hartmetallkugeln unterschiedlichen Durchmessers nacheinander über die Laufbahn gewalzt, wodurch Druckeigenspannungen erzeugt werden. In Abhängigkeit von der Geometrie der Rollkörper bauen sich die Druckeigenspannungen bevorzugt in verschiedenen Tiefen auf Das Tiefenprofil folgt dabei der Verteilung der von Mises-Vergleichsspannung, wobei mit wiederholten Überrollungen eine Überlagerung mit den bereits erzeugten Druckeigenspannungen stattfindet. Insgesamt ergibt sich durch die zwei oder mehr separaten Festwalzprozesse ein überlagerter Druckeigenspannungsverlauf, bei dem bereits in geringer Tiefe eine vergleichsweise nahe dem maximalen Betrag liegende Druckeigenspannung auftritt. Im Gegensatz dazu fällt der Betrag der Druckeigenspannung beim Kugelstrahlen, Festwalzen mit nur einem Wälzkörper oder Hartdrehen in geringer Tiefe vergleichsweise stärker ab. Dieser starke Abfall innerhalb geringer Tiefe bis beispielsweise 50 µm oder 100 µm je nach angewendetem Verfahren wirkt sich insbesondere bei oberflächeninduzierter normalspannungsgesteuerter Rissbildung (z. B. durch Reibzugspannungen) nachteilig auf die Lebensdauer des Laufbahnelements aus. Durch das Festwalzen der Laufbahn mit zwei unterschiedlich großen Rollkörpern lässt sich der Verlauf der Druckeigenspannungen bis zum Maximalwert dem idealen Verlauf einer konstanten Druckeigenspannung mit zunehmender Tiefe im Vergleich zu bekannten Verfahren besser annähern.

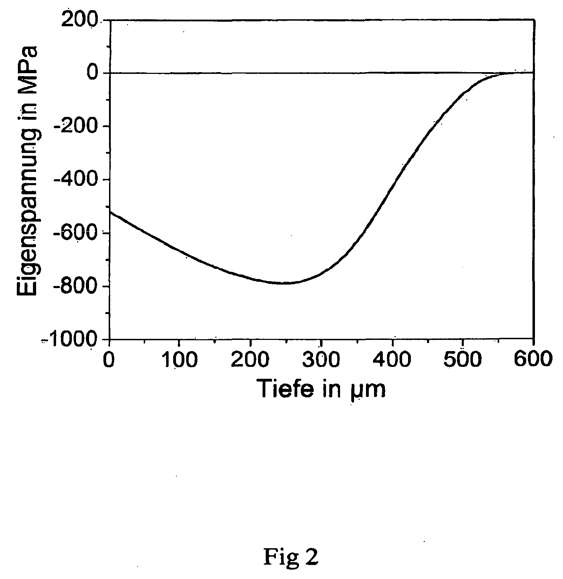

Das Laufbahnelement der Wälzlageranordnung weist bevorzugt unter der Oberfläche der Laufbahn bis zu einer Tiefe von wenigstens 200 µm Druckeigenspannungen von mindestens 400 MPa auf. Bevorzugt liegt das Maximum der Druckeigenspannung jedoch zwischen 500 MPa und 800 MPa bis möglichst nicht wesentlich über 1000 MPa. Bis zu einer Tiefe von 100 µm jedoch liegen die Druckeigenspannungen mindestens bei einem Wert von 40% des Maximalwerts der Druckeigenspannung. Dadurch lässt sich ein mit zunehmender Tiefe gleichmäßigerer Eigenspannungszustand als bei bekannten Verfahren des Randschicht- bzw. Kaltverfestigens erreichen. Dies wiederum resultiert in einer erhöhten Lebensdauer des Laufbahnelements und somit der Wälzlageranordnung unter den genannten Betriebs- bzw. Beanspruchungsbedingungen. In der Figur 2 ist beispielhaft ein vorteilhafter Verlauf der Druckeigenspannung eines Laufbahnelements, aufgetragen gegen die Tiefe in Bezug auf die Laufbahn, dargestellt. Der Verlauf ist mit einem Verfahren nach einem Ausführungsbeispiel der Erfindung durch Festwalzen mit zwei unterschiedlich dimensionierten Rollkörpern erzeugt worden. Es wird deutlich, dass sich bereits in sehr geringer Tiefe unter der Laufbahn eine Eigenspannung von etwa 500 MPa aufbauen lässt, die dann nahezu linear bis auf einen Maximalwert von etwa 800 MPa bei eine Tiefe von etwa 250 µm abfällt.

Vorteilhaft ist die Verwendung von kugel- und/oder walzenartigen Rollkörpern, wobei allerdings auch andere Geometrien zum Einsatz kommen können. Zudem können die beiden Walzschritte auch mit Rollkörpern unterschiedlicher Grundform erfolgen. Bevorzugt liegen bei zylindrischen Rollkörpern der Durchmesser des kleineren Rollkörpers zwischen 1 und 3 mm und der Durchmesser des größeren Rollkörpers zwischen 6 und 9 mm, besonders vorteilhaft 7 und 8 mm.

Verfahren nach Ausführungsbeispielen der Erfindung lassen sich vorteilhaft bei allen bekannten Lagertypen, also neben Kegelrollen- insbesondere auch bei Zylinder-, Kugel- und Pendelrollenlagern einsetzen, wobei die Anforderungen an den Verlauf der Druckeigenspannungen je nach Einsatzbereich des Wälzlagers unterschiedlich ausfallen können. Es lassen sich jedoch deutlich gezielter anforderungsgerechte Verläufe erzeugen als bei bekannten Verfahren.

### Bezugszeichenliste

- 10, 20: Laufbahnelement
- 12, 22: Abrollbahn
- 30: Wälzkörper

## Patentansprüche

1. Verfahren zum Herstellen eines Laufbahnelements einer Lageranordnung, umfassend folgende Verfahrensschritte:
- Bereitstellen eines Laufbahnelements mit einer Laufbahn,
- Härten der Laufbahn durch wenigstens teilweises Aufheizen des Laufbahnelements, Festwalzen der Laufbahn mit einem ersten Rollkörper und
- Festwalzen der Laufbahn mit einem zweiten Rollkörper, wobei der zweite Rollkörper im Vergleich zum ersten Rollkörper wenigstens eine andere Abmessung aufweist.

2. Verfahren nach Anspruch 1, wobei wenigstens einer der Rollkörper eine kugelartige Form aufweist.

3. Verfahren nach Anspruch 1, wobei beide Rollkörper eine kugelartige oder zylinderförmige Gestalt und unterschiedliche Durchmesser aufweisen.

4. Verfahren nach einem der Ansprüche 1 bis 3, wobei nach dem Festwalzen mit dem zweiten Rollkörper ein materialabtragender Verfahrensschritt durchgeführt wird, bei dem die Oberfläche des Laufbahnelements im Bereich der Laufbahn teilweise entfernt wird.

5. Verfahren nach Anspruch 4, wobei beim materialabtragenden Verfahrensschritt weniger als 50 µm der Oberfläche entfernt werden.

6. Verfahren nach Anspruch 4 oder 5, wobei nach dem Festwalzen, Hon- oder Schleifvorgang eine thermische Nachbehandlung durchgeführt wird.

7. Verfahren nach Anspruch 6, wobei die thermische Nachbehandlung bei einer Temperatur durchgeführt wird, die kleiner als die Anlass- oder Umwandlungstemperatur des Härtens ist.

8. Laufbahnelement einer Wälzlageranordnung, umfassend folgende Merkmale:
- wenigstens eine Laufbahn, auf der Wälzkörper der Wälzlageranordnung zum Abrollen vorgesehen sind,
- unter der Oberfläche der Laufbahn sind bis zu einer Tiefe von wenigstens 200 µm Druckeigenspannungen von mindestens 400 MPa ausgebildet, wobei das Minimum der Druckeigenspannung zwischen 400 und 500 MPa und das Maximum der Druckeigenspannung zwischen 500 und 800 MPa liegt; und
- bis zu einer Tiefe von 100 µm ändert sich der Betrag der Druckeigenspannungen um maximal 500 MPa.

## Claims

1. Method for manufacturing a raceway element of a bearing assembly, said method comprising the following method steps:
- providing a raceway element having a raceway,
- hardening the raceway by at least partially heating the raceway element, deep rolling the raceway with a first rolling element, and
- deep rolling the raceway with a second rolling element, the second rolling element having at least one different dimension as compared to the first rolling element.

2. Method according to Claim 1, wherein at least one of the rolling elements has a spherical form.

3. Method according to Claim 1, wherein both rolling elements have a spherical or cylindrical shape and have different diameters.

4. Method according to one of Claims 1 to 3, wherein, after the deep rolling with the second rolling element, a material-removing method step is carried out, in which the surface of the raceway element is partially removed in the region of the raceway.

5. Method according to Claim 4, wherein less than 50 µm of the surface are removed during the material-removing method step.

6. Method according to Claim 4 or 5, wherein a thermal post-treatment is carried out after the deep rolling, a honing process or a grinding process.

7. Method according to Claim 6, wherein the thermal post-treatment is carried out at a temperature which is lower than the annealing or transformation temperature of the hardening step.

8. Raceway element of a rolling bearing assembly, said element comprising the following features:
- at least one raceway, on which rolling bodies of the rolling bearing assembly are intended to roll,
- residual compressive stresses of at least 400 MPa are formed beneath the surface of the raceway down to a depth of at least 200 µm, the minimum of the residual compressive stress being between 400 and 500 MPa and the maximum of the residual compressive stress being between 500 and 800 MPa; and
- the magnitude of the residual compressive stresses changes by at most 500 MPa down to a depth of 100 µm.

## Revendications

1. Procédé de fabrication d'un élément de chemin de roulement d'un agencement de palier, comprenant les étapes de procédé suivantes :
- fourniture d'un élément de chemin de roulement avec un chemin de roulement,
- durcissement du chemin de roulement par chauffage au moins partiel de l'élément de chemin de roulement, galetage du chemin de roulement avec un premier corps de roulement et
- galetage du chemin de roulement avec un deuxième corps de roulement, le deuxième corps de roulement présentant au moins une dimension différente par rapport au premier corps de roulement.

2. Procédé selon la revendication 1, dans lequel au moins l'un des corps de roulement présente une forme de type sphérique.

3. Procédé selon la revendication 1, dans lequel les deux corps de roulement présentent une forme de type sphérique ou cylindrique et présentent des diamètres différents.

4. Procédé selon l'une quelconque des revendications 1 à 3, dans lequel, après le galetage avec le deuxième corps de roulement, une étape de procédé avec enlèvement de matière est mise en oeuvre, dans laquelle la surface de l'élément de chemin de roulement est partiellement enlevée dans la région du chemin de roulement.

5. Procédé selon la revendication 4, dans lequel, lors de l'étape de procédé avec enlèvement de matière, moins de 50 µm de la surface sont enlevés.

6. Procédé selon la revendication 4 ou 5, dans lequel, après le galetage, l'opération de honage ou de meulage, un post-traitement thermique est mis en oeuvre.

7. Procédé selon la revendication 6, dans lequel le post-traitement thermique est mis en oeuvre à une température inférieure à la température de départ ou la température de transformation de durcissement.

8. Élément de chemin de roulement d'un agencement de palier à roulement, comprenant les caractéristiques suivantes :
- au moins un chemin de roulement sur lequel des corps de roulement de l'agencement de palier à roulement doivent rouler,
- sous la surface du chemin de roulement sont réalisées des tensions propres de compression d'au moins 400 MPa jusqu'à une profondeur d'au moins 200 µm, les tensions propres de compression étant au minimum comprises entre 400 et 500 MPa et les tensions propres de compression étant au maximum comprises entre 500 et 800 MPa ; et
- la valeur des tensions propres de compression varie de 500 MPa au maximum jusqu'à une profondeur de 100 µm.
